(19) **Europäisches Patentamt European Patent Office Office européen des brevets**

(11) **EP 1 030 162 B1**

(12) **EUROPEAN PATENT SPECIFICATION**

(45) Date of publication and mention
of the grant of the patent:
**06.10.2010 Bulletin 2010/40**

(51) Int Cl.:
***G01B 21/20*** (2006.01)          ***G01B 11/24*** (2006.01)
***G06T 17/20*** (2006.01)

(21) Application number: **99937077.8**

(22) Date of filing: **17.08.1999**

(86) International application number:
**PCT/JP1999/004408**

(87) International publication number:
**WO 2000/011433 (02.03.2000 Gazette 2000/09)**

(54) **METHOD FOR EVALUATING ERROR IN SHAPE OF FREE CURVED SURFACE**

VERFAHREN ZUR BESTIMMUNG DER FORMABWEICHUNG EINER FREI GEKRÜMMTEN OBERFLÄCHE

PROCEDE D'EVALUATION D'ERREURS DE FORME D'UNE SURFACE COURBE À FORME LIBRE

(84) Designated Contracting States:
**DE FR GB IT**

(30) Priority: **19.08.1998 JP 23252198**

(43) Date of publication of application:
**23.08.2000 Bulletin 2000/34**

(73) Proprietor: **RIKEN**
**Wako-shi,**
**Saitama 351-0198 (JP)**

(72) Inventor: **KASE, Kiwamu**
**Wako-shi**
**Saitama 351-0198 (JP)**

(74) Representative: **Grünecker, Kinkeldey,**
**Stockmair & Schwanhäusser**
**Anwaltssozietät**
**Leopoldstrasse 4**
**80802 München (DE)**

(56) References cited:
**EP-A- 0 898 247     EP-A- 0 977 009**
**JP-A- 5 346 957     JP-A- 11 065 628**
**US-A- 5 257 203     US-A- 5 497 451**

- **BESL P.J.: "GEOMETRIC MODELING AND COMPUTER VISION" PROCEEDINGS OF THE IEEE, vol. 76, no. 8, 1 August 1988 (1988-08-01), pages 936-958, XP000098370 IEEE. NEW YORK, US**
- **PANKANTI S.; DORAI C.; JAIN A.K.: "Robust feature detection for 3D Object Recognition and Matching" PROCEEDINGS OF THE SPIE, vol. 2031, 12 July 1993 (1993-07-12), pages 366-377, XP002211019 SPIE, BELLINGHAM, VA, US**

**EP 1 030 162 B1**

**Description**

BACKGROUND OF THE INVENTION

Field of the Invention

The present invention relates to a method for evaluating a shape error of a free curved surface.

Description of the Prior Art

Conventionally, in the press working or the injection molding processing, a curved surface (i.e. an original curved surface) such as target CAD (Computer Aided Design) data and a curved surface associated therewith (i.e. a distorted curved surface) are mainly "visually" compared, and any defection of forming is sensuously evaluated from experiences based on a difference between these curves. That is, for example in the press working, if the distorted curved surface has "bent", "twisted" and others with respect to the original curved surface, they are visually judged and adjustment of a metal mold is experientially performed.
The above-described visual experiential evaluation is simple and convenient, but it has problems such as large individual differences, dependence on experiences and extremely high arbitrariness. Therefore, means for evaluating the entire bent, twisted and others of the free curved surface by objective means with no arbitrariness has been wanted.
On the other hand, for this purpose, a formed article (distorted curved surface) which was actually formed by using, e.g., a formed sheet metal and the like is measured by a Coordinate Measuring Machine or a digitizer and an image of the obtained result is displayed together with the original curved surface (CAD data and others) so that a shape error such as bent or twisted can be roughly visually recognized. With this technique, however, if a reference shape is not flat but has a complicated curve, a difference from a result of the three-dimensional measurement can hardly be visually recognized.
Further, if the distorted curved surface has a local "wrinkle", "bump" or "dent", the image is largely changed and the entire shape error is hard to be evaluated by this means.
Pankant, S. et al., in a paper entitled "Robust feature detection for 3D Object Recognition and Matching", Proceedings of the SPIE, SPIE, Belligham, VA, USAvol. 2031, pages 366-377, disclose a method for detecting surface features in the context of 3D object recognition comprising smoothing of noise, detecting both edge-based and region-based features and integrating information provided by individual feature detectors.

SUMMARY OF THE INVENTION

The present invention is intended to solve the above-mentioned problems. That is, it is a main object of the present invention to provide a method for evaluating a shape error of a free curved surface, by which an entire shape of an original curved surface such as CAD data with that of a distorted curved surface after forming can be easily objectively compared for a difference (error). The present invention provides a method being capable of evaluating the entire shape of a free curved surface without being affected by a local "wrinkle", "bump" or "dent". The present invention further provides a method for evaluating a shape error of a free curved surface in which the numerical calculation is facilitated and the influence of errors in numeric values and measurements are small and which can be applied to both a parametric curved surface and clouds of points.
According to the present invention, a method for evaluating a shape error of a free curved surface is provided in accordance with claim 1. The method comprises: a step A for dividing an original curved surface S into up to six curved surface units by combinations of signs (+, 0, -) of a principal curvature ($k_1$, $k_2$) in each pint on the curved surface; a step B for associating a distorted surface S' with the original curved surface S and dividing the distorted curved surface S' into curved surface units having the same boundary by projection along the normal vectors of S; a step C for obtaining from the average normal vectors an average normal vector for each curved surface unit with respect to the original curved surface and the distorted curved surface; a step D for obtaining from the average normal vectors "a bent component" and "a twisted component" of all combinations of pairs of the different curved surface units with respect to the original curved surface and the distorted curved surface; and a step E for calculating a difference between "a bent component" and "a twisted component" of the respective components in the original curved surface and "a bent component" and "a twisted component" of the same respective components in the distorted curved surface.
According to the above method of the present invention, if the curved surface remains to be continuous even after distortion, local irregularities (wrinkles, bump or dent) can be canceled by taking an average of the normal vectors in each region (curved surface unit) of the free curved surface, and a global direction of that region (average normal vector) can be determined. Therefore, geometrical properties (a bent component, a twisted component) of the curved surface can be readily objectively evaluated without ambiguity based on the directional relationship relative to another region of the average normal vector.

Moreover, since the geometrical properties can be mathematically easily calculated only from the normal vector in each point on the curved surface, the numerical calculation can be facilitated and the influence of the numeric errors and the measurement errors can be reduced, whereby the method can be applied to both the parametric curved surface and the clouds of points.

Further, according to a preferred embodiment of the present invention, each curved surface unit is divided into two directions orthogonal to each other and the average normal vectors of the two divided regions are calculated in the step C, and "a bent component" and "a twisted component" are obtained with respect to combinations of pairs of the average normal vectors in the two divided regions in the respective curved surface units in the step D.

With this method, dividing the same curved surface units in the original curved surface S into two directions can obtain two pairs of the bent component and the twisted component in the corresponding region as well as the above-mentioned relationship relative to another region. It is thus possible to evaluate both the relationship with another region and a change in shape in the corresponding region with respect to each curved surface unit by this two-stage evaluation, thereby performing further accurate shape error evaluation.

Other objects and advantageous characteristics of the present invention will be apparent from the following description with reference to the accompanying drawings.

BRIEF DESCRIPTION OF THE DRAWINGS

Fig. 1 is a flow chart typically showing a method according to the present invention;
Figs. 2A, 2B and 2C are schematic drawings corresponding to the flow chart of Fig. 1; and
Fig. 3 is a view showing the relationship between two normal vectors, a bent component $\theta$ and a twisted component $\phi$.

BRIEF DESCRIPTION OF THE PREFERRED EMBODIMENTS

A free curved surface S = S(u, v) can be expressed by parameters u and v. Expression 3 is a relational expression in the differential geometry. This relationship is disclosed in, for example, "Curves and Surfaces for Computer Aided Geometric Design" (Farin, G, 1988, A Practical Guide. Academic Press).

Expression 3

$$E = S_u S_u, F = S_u S_v, G = S_v S_v, L = \mathbf{n} S_{uu},$$

$$M = \mathbf{n} S_{uv}, N = \mathbf{n} S_{vv}, \mathbf{n} = \frac{S_u \times S_v}{\|S_u \times S_v\|} \qquad (1)$$

The principal curvature is $k_1$, $k_2$, which can be obtained by solving Formula 2 of Expression 4.

Expression 4

$$\kappa^2 - \frac{NE - 2MF + LG}{EG - F^2} \kappa + \frac{LN - M^2}{EG - F^2} = 0 \qquad (2)$$

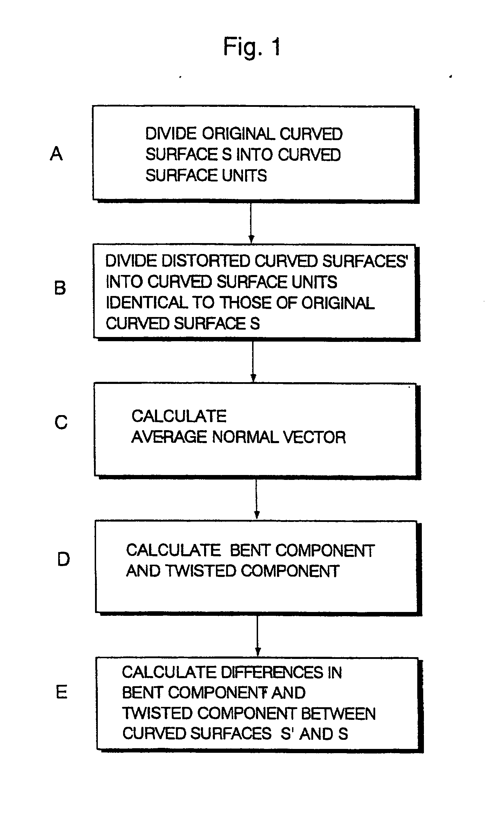

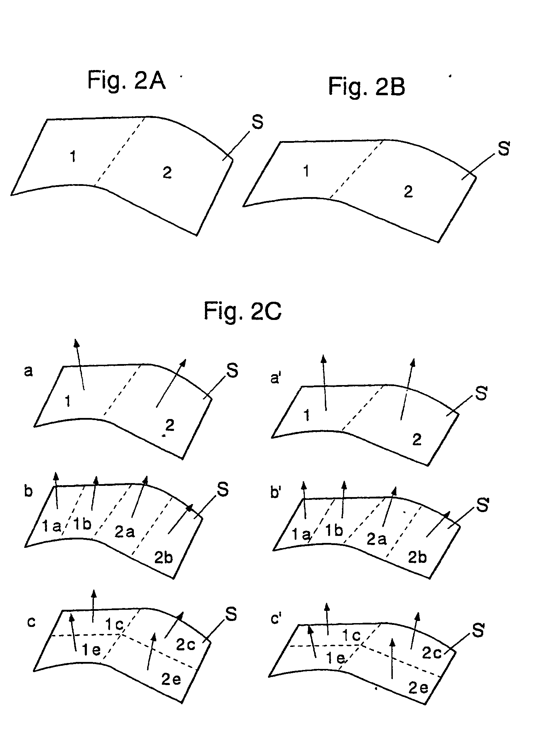

The method according to the present invention will now be described. Fig. 1 is a flow chart typically showing the method according to the present invention, and Figs. 2A, 2B and 2C are schematic drawings corresponding to this flow chart. As shown in these drawings, the method according to the present invention basically comprises five steps A to E.

In a first step A, an original curved surface S is divided into up to six curved surface units by combinations of signs (+, 0, -) of the principal curvature ($k_1$, $k_2$) in each point on that curved surface. The more number of points for calculating the principal curvature increases, the more the accuracy can be improved. Additionally, six combinations of the signs (+, 0, -) of the principal curvature ($k_1$, $k_2$) are: (+, +) ; (+, -) ; (+, 0); (-, -) ; (-, 0); and (0, 0). For example, (+, +) means a convex surface such that the both principal curvature s ($k_1$, $k_2$) are convex; (-, -), a concave surface such that the both principal curvature s are convex; (+, -), a saddle-like surface such that the both principal curvature s are concavo-convex; and (+, 0), (-, 0) or (0, 0), a curved surface (cylindrical surface and the like) such that one of the two principal curvature s is linear. Therefore, the original curved surface S can be divided into up to six curved surface units (two curved surface units 1 and 2 in the example shown in Figs. 2A, 2B and 2C) having the shape approximating the original curved surface S by this step (dividing into curved surface units). It is to be noted that the dividing method using combinations of the principal curvature s is disclosed in, for example, CAD Jrnl. V.30, N6. pp473-486(1998), R. Gadh and R. Sonthi: "Geometric shape abstractions for internet-based virtural prototyping" and others.

In a second step B, a distorted curved surface S' is associated with the original curved surface S and divided into the curved surface units having the same boundary by projection along normal vectors of S. In this case, each curved surface unit of the distorted curved surface S' may include different combinations of the principal curvature s.

In a third step C, the average normal vector is calculated for each curved surface unit with respect to the original curved surface S and the distorted curved surface S'. Additionally, in the third step, each curved surface unit is divided into two directions orthogonal to each other (1a, 1b/2a, 2b and 1c, 1e/2c, 2e in the example shown in Fig. 2C), and the normal average line vectors in the divided two regions are obtained. The method for calculating the average normal vector will be described later.

In a fourth step D, "a bent component" and "a twisted component" in all the combinations of the different curved surface units are obtained with respect to the original curved surface S and the distorted curved surface S' from the later-described formula. Further, in this step, in each curved surface unit, "a bent component" and "a twisted component" in the combinations of pairs of the average normal vectors in the two divided regions are obtained.

A fifth step E calculates a difference between "a bent component" and "a twisted component" in each combination in the original curved surface and "a bent component" and "a twisted component" in each of the same combinations in the distorted curved surface S'.

If a plurality of curved surface units are defined in the original curved surface S in the above-described fourth step D, "a bent component" and "a twisted component" are obtained with respect to all the combinations of pairs of different curved surface units. Further, as to the distorted curved surface S', "a bent component" and "a twisted component" are likewise obtained with respect to the corresponding curved surface units. Accordingly, when a difference of "a bent component" and "a twisted component" of combinations of the corresponding curved surface units is calculated in the fifth step E, the geometrical properties (a bent component, a twisted component and a shape error as a difference between these components) of the distorted curved surface S' relative to the original curved surface S can be objectively evaluated.

Furthermore, a change in shape in each curved surface unit can be objectively evaluated by dividing each curved surface unit in two directions and obtaining the average normal vectors in the two divided regions in the third step C and by obtaining "a bent component" and "a twisted component" with respect to the combinations of pairs of the average normal vectors in the two divided regions in the fourth step D. Therefore, both the relationship relative to another region and a change in shape in the corresponding region can be evaluated with respect to each curved surface unit by this two-stage evaluation, thereby carrying out the further accurate shape error evaluation.

The calculation technique in the above-described method will now be described hereinafter.

The average normal vector in the third step C corresponds to a result of division of a synthetic vector which is a sum of unit normal vectors in respective points (m points: intersection points of normal vectors in the respective points on the original curved surface and straight lines parallel thereto in the case where the curved surface is a distorted curved surface) on the curved surface by m. In this case, it is determined that the starting points of the average normal vectors are the same in both the original curved surface and the distorted curved surface, and an average (a result of division of the synthetic vector of positional vectors at the respective points by m) of m points used for calculating the unit normal vector in the original curved surface is used. Therefore, one vector is defined for each curved surface unit.

In addition, the normal vector in each point on the curved surface corresponds to n in Formula (1) when the free curved surface is expressed as a parametric curved surface S = S(u, v). Moreover, when the curved surface is represented as several point groups on that curved surface, the normal vector can be approximately obtained by calculating an outer product of vectors toward adjacent two points which are not on the same straight line in each point. Thereafter, the average can be obtained after normalization (unit vectorization), as similar to the case of the parametric curved surface. The method according to the present invention can be therefore similarly applied to the parametric curved surface and the point group.

Furthermore, when the surface remains to be a continuous curved surface after distortion, the local irregularities (wrinkles, bump or dent and others) can be canceled. Even if wrinkles or surface sinks exist on the distorted curved surface S', they can be offset so that the overall shape of the curved surface unit can be expressed by a single synthetic vector (average normal vector).

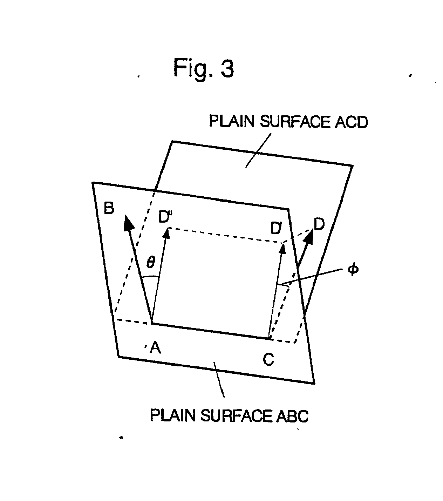

Fig. 3 typically shows a technique for obtaining a bent component θ and a twisted component φ from the two normal vectors representative of the curved surface unit. As shown in the drawing, assuming that: vectors AB and CD are average normal vectors with the respective points A and C as starting points; a vector CD', an orthogonal projection from the vector CD to a plain surface defined by three points A, B and C; and a vector AD'', a vector parallel to the vector CD', it is possible to define that the bent component θ is an angle formed between the vectors AB and AD'' and a twisted component φ is an angle formed by a plain surface ABC and a counterpart ACD.

Formulas (3) to (7) of Expressions 5 and 6 represent the bent component and the twisted component in the form of formulas. A sign of the bent component θ is determined by a function sgn as shown by Formula (3). If the sign in parentheses of the function sign_of (.) is positive, 1.0 is returned, and if the same is negative, - 1.0 is returned. The normal vector of the plain surface ABC is determined as a vector n calculated by Formula (4), and Formula (5) is used to express a projection of the vector CD to the plain surface ABC as angle with a sign as shown in Formula (6). It is to be noted that Arc cos denotes an inverse function of cosine.

Expression 5

$$\text{sgn}(\overrightarrow{AB}, \overrightarrow{CD}, \overrightarrow{CA}) = \begin{cases} +1 & \text{if} \quad (\overrightarrow{AB} - \overrightarrow{CD}) \cdot \overrightarrow{CA} > 0 \\ -1 & \text{else} \end{cases} \tag{3}$$

$$\vec{n} = \frac{\overrightarrow{AB} \times \overrightarrow{AC}}{\left| \overrightarrow{AB} \times \overrightarrow{AC} \right|} \tag{4}$$

$$\overrightarrow{CD'} = \overrightarrow{CD} - (\vec{n} \cdot \overrightarrow{CD})\vec{n} \tag{5}$$

$$\theta = \text{sgn}(\overrightarrow{AB}, \overrightarrow{CD}, \overrightarrow{CA}) \left| Arc \cos(\frac{\overrightarrow{AB} \cdot \overrightarrow{CD'}}{\left| \overrightarrow{AB} \cdot \overrightarrow{CD'} \right|}) \right| \tag{6}$$

On the other hand, the twisted component φ can be expressed as an angle with a sign as shown by Formula (7). In Formula (7), a sign representative of a direction is added to an angle formed between the plain surface ABC and the counterpart ACD with AC as a nodal line. It is to be noted that Arc sin is an inverse function of sin in Formula (7).

Expression 6

$$\phi = Arc \sin(\frac{(\overrightarrow{AC} \times (\overrightarrow{AB} \times \overrightarrow{AC})) \times (\overrightarrow{AC} \times (\overrightarrow{CD} \times \overrightarrow{AC}))}{\left| (\overrightarrow{AC} \times (\overrightarrow{AB} \times \overrightarrow{AC})) \right| \left| (\overrightarrow{AC} \times (\overrightarrow{CD} \times \overrightarrow{AC})) \right|} \cdot \frac{\overrightarrow{AC}}{\left| \overrightarrow{AC} \right|}) \tag{7}$$

where $\overline{AB} \times \overline{CD}$ represents an outer product of the vectors of AB and CD.

As described above, the method for evaluating a shape error of a free curved surface according to the present invention is advantageous in that: the original curved surface such as CAD data can be readily objectively compared with the distorted curved surface after forming for the entire shape and a difference (error) thereof; the entire shape of the free curved surface can be evaluated without being affected by the local "wrinkles", "bump" or "dent"; the numerical calculation is facilitated; the influence of the numeric error and the measurement error is reduced; and the method can be applied to both the parametric curved surface and the point group.

Although the present invention has been explained based on the preferred embodiments, it is understood that the scope of the invention is not restricted these embodiments. On the contrary, the true scope of the invention includes improvements, modifications and equivalents within the appended claims.

**Claims**

1.   A method for evaluating a shape error of a free curved surface comprising:

a step A for dividing an original curved surface S into up to six curved surface units by combinations of signs (+, 0, -) of a principal curvature (k1, k2) in each point on said curved surface;

a step B for associating a distorted curved surface S' with said original curved surface S and dividing it into curved surface units having the same boundary by projection along the normal vectors of S;

a step C for obtaining an average normal vector for each curved surface unit with respect to said original curved surface and said distorted curved surface;

a step D for obtaining from the average normal vectors "a bent component" and "a twisted component" in all the combinations of pairs of different curved surface units with respect to said original curved surface and said distorted curved surface; and

a step E for calculating a difference between "the bent component" and "the twisted component" in each combination in said original curved surface and "the bent component" and "the twisted component" in each identical combination in said distorted curved surface.

2.   A method for evaluating a shape error of a free curved surface according to claim 1, wherein each curved surface unit is divided into two orthogonal directions and average normal vectors in the two divided regions are obtained in said step C, and "the bent component" and "the twisted component" are obtained with respect to combinations of pairs of said average normal vectors in said two divided regions in each curved surface unit in said step D.

3.   A method for evaluating a shape error of a free curved surface according to claim 2, wherein a bent component $\theta$ is calculated by Expression 1:

**Expression 1**

$$\text{sgn}(\overline{AB}, \overline{CD}, \overline{CA}) = \begin{cases} +1 & if \quad (\overline{AB} - \overline{CD}) \cdot \overline{CA} > 0 \\ -1 & else \end{cases} \tag{3}$$

$$\vec{n} = \frac{\overline{AB} \times \overline{AC}}{|\overline{AB} \times \overline{AC}|} \tag{4}$$

$$\overline{CD'} = \overline{CD} - (\vec{n} \cdot \overline{CD})\vec{n} \tag{5}$$

$$\theta = sgn(\overrightarrow{AB}, \overrightarrow{CD}, \overrightarrow{CA}) \left| Arc \, cos(\frac{\overrightarrow{AB} \cdot \overrightarrow{CD}}{|\overrightarrow{AB} \cdot \overrightarrow{CD}|}) \right|, \qquad (6)$$

and a twisted component $\phi$ can be calculated by Expression 2:

**Expression 2**

$$\phi = Arc \, sin(\frac{(\overrightarrow{AC} \times (\overrightarrow{AB} \times \overrightarrow{AC})) \times (\overrightarrow{AC} \times (\overrightarrow{CD} \times \overrightarrow{AC}))}{|(\overrightarrow{AC} \times (\overrightarrow{AB} \times \overrightarrow{AC}))||(\overrightarrow{AC} \times (\overrightarrow{CD} \times \overrightarrow{AC}))|} \cdot \frac{\overrightarrow{AC}}{|\overrightarrow{AC}|}) \qquad (7)$$

where ABxCD represents an outer product of the average normal vectors AB and CD with the respective points A and C as starting points and the nodal line AC.

**Patentansprüche**

1.  Verfahren zum Bewerten eines Formfehlers einer frei gekrümmten Fläche, das umfasst:

    einen Schritt A zum Unterteilen einer ursprünglichen gekrümmten Fläche S in bis zu sechs gekrümmte Flächen-Einheiten durch Kombinationen von Vorzeichen (+, 0, -) einer Hauptkrümmung (k1, k2) an jedem Punkt der gekrümmten Fläche;
    einen Schritt B zum Verbinden der verformten gekrümmten Fläche S' mit der ursprünglichen gekrümmten Fläche S und zum Unterteilen derselben in gekrümmte Flächen-Einheiten, die die gleiche Grenze haben, durch Projektion entlang der Normalenvektoren von S;
    einen Schritt C zum Ermitteln eines durchschnittlichen Normalenvektors für jede gekrümmte Flächen-Einheit in Bezug auf die ursprüngliche gekrümmte Fläche und die verformte gekrümmte Fläche;
    einen Schritt D zum Ermitteln einer "gebogenen Komponente" und einer "verdrehten Komponente" aus den durchschnittlichen Normalenvektoren in allen Kombinationen von Paaren unterschiedlich gekrümmter Flächen-Einheiten in Bezug auf die ursprüngliche gekrümmte Fläche und die verformte gekrümmte Fläche; und
    einen Schritt E zum Berechnen einer Differenz zwischen der "gebogenen Komponente" und der "verdrehten Komponente" in jeder Kombination in der ursprünglichen gekrümmten Fläche und der "gebogenen Komponente" und der "verdrehten Komponente" in jeder identischen Kombination in der verformten gekrümmten Fläche.

2.  Verfahren zum Bewerten eines Formfehlers einer frei gekrümmten Fläche nach Anspruch 1, wobei jede gekrümmte Flächen-Einheit in zwei orthogonale Richtungen unterteilt wird und durchschnittliche Normalenvektoren in den zwei unterteilten Bereichen in dem Schritt C ermittelt werden und die "gebogene Komponente" sowie die "verdrehte Komponente" in Bezug auf Kombinationen von Paaren der durchschnittlichen Normalenvektoren in den zwei unterteilten Bereichen in jeder gekrümmten Flächen-Einheit in dem Schritt D ermittelt werden.

3.  Verfahren zum Bewerten eines Formfehlers einer frei gekrümmten Fläche nach Anspruch 2, wobei eine gebogene Komponente θ mit Ausdruck 1 berechnet wird

**Ausdruck 1**

$$sgn(\overrightarrow{AB}, \overrightarrow{CD}, \overrightarrow{CA}) = \begin{cases} +1 & \text{if} \quad (\overrightarrow{AB} - \overrightarrow{CD}) \cdot \overrightarrow{CA} > 0 \\ -1 & \text{else} \end{cases}, \quad (3)$$

$$\vec{n} = \frac{\overrightarrow{AB} \times \overrightarrow{AC}}{|\overrightarrow{AB} \times \overrightarrow{AC}|} \qquad (4)$$

$$\overrightarrow{CD'} = \overrightarrow{CD} - (\vec{n} \cdot \overrightarrow{CD})\vec{n} \qquad (5)$$

$$\theta = \mathrm{sgn}(\overrightarrow{AB}, \overrightarrow{CD}, \overrightarrow{CA}) \left| Arc \cos\left(\frac{\overrightarrow{AB} \cdot \overrightarrow{CD'}}{|\overrightarrow{AB} \cdot \overrightarrow{CD'}|}\right) \right| \qquad (6)$$

und eine verdrehte Komponente $\phi$ mit Ausdruck 2 berechnet werden kann

$$\phi = Arc \sin\left(\frac{(\overrightarrow{AC} \times (\overrightarrow{AB} \times \overrightarrow{AC})) \times (\overrightarrow{AC} \times (\overrightarrow{CD} \times \overrightarrow{AC}))}{|(\overrightarrow{AC} \times (\overrightarrow{AB} \times \overrightarrow{AC}))||(\overrightarrow{AC} \times (\overrightarrow{CD} \times \overrightarrow{AC}))|} \cdot \frac{\overrightarrow{AC}}{|\overrightarrow{AC}|}\right) \qquad (7)$$

wobei ABxCD ein Kreuzprodukt der durchschnittlichen Normalenvektoren AB und CD mit den jeweiligen Punkten A und C als Ausgangspunkte und der Knotenlinie AC darstellt.

**Revendications**

1. Procédé pour évaluer une erreur de forme d'une surface courbe libre comprenant :

   une étape A pour diviser une surface courbe originale S en jusqu'à six unités de surface courbe par des combinaisons de signes (+, 0, -) d'une courbure principale (k1, k2) dans chaque point sur ladite surface courbe ;
   une étape B pour associer une surface courbe déformée S' à ladite surface courbe originale S et pour la diviser en unités de surface courbe ayant la même frontière par projection le long des vecteurs normaux de S ;
   une étape C pour obtenir un vecteur normal moyen pour chaque unité de surface courbe par rapport à ladite surface courbe originale et ladite surface courbe déformée ;
   une étape D pour obtenir, à partir des vecteurs normaux moyens, « une composante pliée » et « une composante tordue » dans toutes les combinaisons de couples d'unités de surface courbe différentes par rapport à ladite surface courbe originale et ladite surface courbe déformée ; et
   une étape E pour calculer une différence entre « la composante pliée » et « la composante tordue » dans chaque combinaison dans ladite surface courbe originale et « la composante pliée » et « la composante tordue » dans chaque combinaison identique dans ladite surface courbée déformée.

2. Procédé pour évaluer une erreur de forme d'une surface courbe libre selon la revendication 1, dans lequel chaque unité de surface courbe est divisée dans deux directions orthogonales et des vecteurs normaux moyens dans les deux zones divisées sont obtenus dans ladite étape C, et « la composante pliée » et « la composante tordue » sont obtenues par rapport à des combinaisons de couples desdits vecteurs normaux moyens dans lesdites deux zones divisées dans chaque unité de surface courbe dans ladite étape D.

3. Procédé pour évaluer une erreur de forme d'une surface courbe libre selon la revendication 2, dans lequel une composante pliée $\theta$ est calculée par l'Expression 1 :

Expression 1

$$\text{sgn}(\overrightarrow{AB}, \overrightarrow{CD}, \overrightarrow{CA}) = \begin{cases} +1 & \text{if} \quad (\overrightarrow{AB} - \overrightarrow{CD}) \cdot \overrightarrow{CA} > 0 \\ -1 & \text{else} \end{cases} \tag{3}$$

$$\vec{n} = \frac{\overrightarrow{AB} \times \overrightarrow{AC}}{|\overrightarrow{AB} \times \overrightarrow{AC}|} \tag{4}$$

$$\overrightarrow{CD'} = \overrightarrow{CD} - (\vec{n} \cdot \overrightarrow{CD})\vec{n} \tag{5}$$

$$\theta = \text{sgn}(\overrightarrow{AB}, \overrightarrow{CD}, \overrightarrow{CA}) \left| \text{Arc} \cos\left(\frac{\overrightarrow{AB} \cdot \overrightarrow{CD'}}{|\overrightarrow{AB} \cdot \overrightarrow{CD'}|}\right) \right| \tag{6}$$

et une composante tordue $\phi$ peut être calculée par l'Expression 2 :

Expression 2

$$\phi = \text{Arc} \sin\left(\frac{(\overrightarrow{AC} \times (\overrightarrow{AB} \times \overrightarrow{AC})) \times (\overrightarrow{AC} \times (\overrightarrow{CD} \times \overrightarrow{AC}))}{|(\overrightarrow{AC} \times (\overrightarrow{AB} \times \overrightarrow{AC}))||(\overrightarrow{AC} \times (\overrightarrow{CD} \times \overrightarrow{AC}))|} \cdot \frac{\overrightarrow{AC}}{|\overrightarrow{AC}|}\right) \tag{7}$$

où AB $\times$ CD représente un produit extérieur des vecteurs normaux moyens AB et CD, les points respectifs A et C étant des points de départ, et de la ligne nodale AC.

## Fig. 1

A    ┌─────────────────────────────┐
     │ DIVIDE ORIGINAL CURVED      │
     │ SURFACE S INTO CURVED       │
     │ SURFACE UNITS               │
     └─────────────────────────────┘

B    ┌─────────────────────────────┐
     │ DIVIDE DISTORTED CURVED SURFACES' │
     │ INTO CURVED SURFACE UNITS   │
     │ IDENTICAL TO THOSE OF ORIGINAL │
     │ CURVED SURFACE S            │
     └─────────────────────────────┘

C    ┌─────────────────────────────┐
     │ CALCULATE                   │
     │ AVERAGE NORMAL VECTOR       │
     └─────────────────────────────┘

D    ┌─────────────────────────────┐
     │ CALCULATE BENT COMPONENT    │
     │ AND TWISTED COMPONENT       │
     └─────────────────────────────┘

E    ┌─────────────────────────────┐
     │ CALCULATE DIFFERENCES IN    │
     │ BENT COMPONENT AND          │
     │ TWISTED COMPONENT BETWEEN   │
     │ CURVED SURFACES S' AND S    │
     └─────────────────────────────┘

## Fig. 2A

## Fig. 2B

## Fig. 2C

## Fig. 3

PLAIN SURFACE ACD

B   D"   D'   D

θ   φ

A   C

PLAIN SURFACE ABC

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Pankant, S. et al.** Robust feature detection for 3D Object Recognition and Matching. *Proceedings of the SPIE, SPIE,* vol. 2031, 366-377
- Curves and Surfaces for Computer Aided Geometric Design. **Farin, G.** A Practical Guide. Academic Press, 1988
- **R. Gadh ; R. Sonthi.** Geometric shape abstractions for internet-based virtural prototyping. *CAD Jrnl.,* 1998, vol. 30 (6), 473-486